# EUROPÄISCHE PATENTANMELDUNG

(11) **EP 2 151 369 A1**
(43) Veröffentlichungstag der Anmeldung: **10.02.2010**
(21) Anmeldenummer: 08161700.3
(22) Anmeldetag: 04.08.2008
(51) Int. Cl.: B62D 29/00

(54) **Dichtteil aus schäumbarem Material**

(71) Anmelder: Sika Technology AG, 6340 Baar (CH)
(72) Erfinder: Ambrus, Zoltan, 5403, Endingen (CH); Zingraff, Loic, 8006, Zürich (CH)
(74) Vertreter: Sika Patent Attorneys

(57) **Zusammenfassung**

Die vorliegende Erfindung betrifft Dichtteile (1) aus schäumbarem Material (2) zur Befestigung an einer Dichtfläche (3), bei welchen auf der der Dichtfläche zugewanden Seite des Dichtteils (1) Abstandhalter (4) aus schäumbarem Material ausgeformt sind.

Erfindungsgemässe Dichtteile werden beispielsweise in strukturellen Bauteilen wie Karosserien und/oder Rahmen von Transport- und Fortbewegungsmitteln eingesetzt.

## Beschreibung

### Technisches Gebiet

Die Erfindung geht aus von einem Dichtteil aus schäumbarem Material zur Befestigung an einer Dichtfläche nach dem Oberbegriff des ersten Anspruches.

Weiterhin geht die Erfindung aus von der Verwendung eines derartigen Dichtteils, einem Verfahren zur Herstellung eines derartigen Dichtteils, einem geschäumten derartigen Dichtteil sowie einem Verfahren zur Abdichtung und/oder Verstärkung von Hohlräumen von strukturellen Bauteilen nach dem Oberbegriff weiterer unabhängiger Ansprüche.

### Stand der Technik

Oftmals werden bei Konstruktionen jeglicher Art hohlräumige strukturelle Bauteile eingesetzt. Diese Bauweise erlaubt es, das Gewicht der Konstruktion und den Materialaufwand niedrig zu halten.

Der Einsatz von schäumbaren Dichtteilen erlaubt es, strukturelle Bauteile erst nach der Montage abzudichten und/oder zu verstärken. Dies ist etwa bei der Herstellung von Transportmittelstrukturen der Fall. Nach dem Einsetzen von schäumbaren Dichtteilen, jedoch vor deren Schäumung, werden die strukturellen Bauteile üblicherweise oberflächenbehandelt, insbesondere in Reinigungs-, Phosphatierungs- und/oder Tauchlackierungsbädern behandelt, um das strukturelle Bauteil vor Korrosion zu schützen.

Das Aufliegen der Dichtteile auf den strukturellen Bauteilen erschwert den Zugang von Oberflächenbehandlungsmitteln, insbesondere Reinigungs-, Phosphatierungs- und Tauchlackierungsflüssigkeiten, zur Bauteiloberfläche unter dem Dichtteil, was infolgedessen den Korrosionsschutz der erwähnten Bauteiloberfläche verschlechtert.

Aus dem verschlechterten Korrosionsschutz der Auflageflächen, im folgenden Kontaktflächen genannt, resultieren erhöhte Anforderungen an den Oberflächenbehandlungsprozess, an die Oberflächenbehandlungsmittel, insbesondere Tauchlackierungsflüssigkeiten, und die schäumbaren Materialien.

### Darstellung der Erfindung

Aufgabe der vorliegenden Erfindung ist es daher, bei einem Dichtteil aus schäumbarem Material der eingangs genannten Art den Zugang von Oberflächenbehandlungsmitteln wie Reinigungs-, Phosphatierungs- und Tauchlackierungsflüssigkeiten zur Bauteiloberfläche unter dem Dichtteil gegenüber dem Stand der Technik zu verbessern.

Erfindungsgemäss wird dies durch die Merkmale des ersten Anspruches erreicht.

Kern der Erfindung ist es also, dass auf der der Dichtfläche zugewandten Seite des Dichtteils Abstandhalter aus schäumbarem Material ausgeformt sind.

Die Vorteile der Erfindung sind unter anderem darin zu sehen, dass die Kontaktfläche kleiner ist, wenn das Dichtteil über Abstandhalter auf der Dichtfläche eines strukturellen Bauteils aufliegt als wenn das Dichtteil mit seiner gesamten der der Dichtfläche zugewanden Seite auf der Dichtfläche aufliegt.

Weitere vorteilhafte Ausgestaltungen der Erfindung ergeben sich aus den Unteransprüchen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Kurze Beschreibung der Zeichnung

Im Folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
Fig. 1 einen schematischen Querschnitt durch ein erfindungsgemässes Dichtteil mit einem Befestigungsmittel.
Fig. 2 einen schematischen Querschnitt durch ein weiteres erfindungsgemässes Dichtteil in einem Hohlraum vor Schäumung des schäumbaren Materials.
Fig. 3a - 3c schematische Querschnitte durch weitere erfindungsgemässe Dichtteile mit verschiedenartig ausgeformten Abstandhaltern.
Fig. 3d - 3g schematische Darstellungen von weiteren erfindungsgemässen Dichtteilen mit verschiedenartig ausgeformten Abstandhaltern.
Fig. 4 einen schematischen Querschnitt durch ein weiteres erfindungsgemässes Dichtteil in einem Hohlraum vor Schäumung des schäumbaren Materials.
Fig. 5 einen schematischen Querschnitt durch ein weiteres erfindungsgemässes Dichtteil in einem Hohlraum nach der Schäumung des schäumbaren Materials.
Fig. 6 einen schematischen Querschnitt durch ein weiteres erfindungsgemässes Dichtteil mit einem Trägerteil in einem Hohlraum vor Schäumung des schäumbaren Materials.
Fig. 7 eine schematische Darstellung von einem weiteren erfindungsgemässen Dichtteil, welches ein hohles Trägerteil parallel zur Dichtfläche vollständig umfasst.
Fig. 8 einen schematischen Querschnitt durch ein weiteres erfindungsgemässes Dichtteil mit einem Trägerteil in einem Hohlraum nach der Schäumung des schäumbaren Materials.

Es sind nur die für das unmittelbare Verständnis der Erfindung wesentlichen Elemente gezeigt.

### Weg zur Ausführung der Erfindung

Mit "Poly" beginnende Substanznamen wie beispielsweise Polyisocyanat, Polyurethan, Polyester oder Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

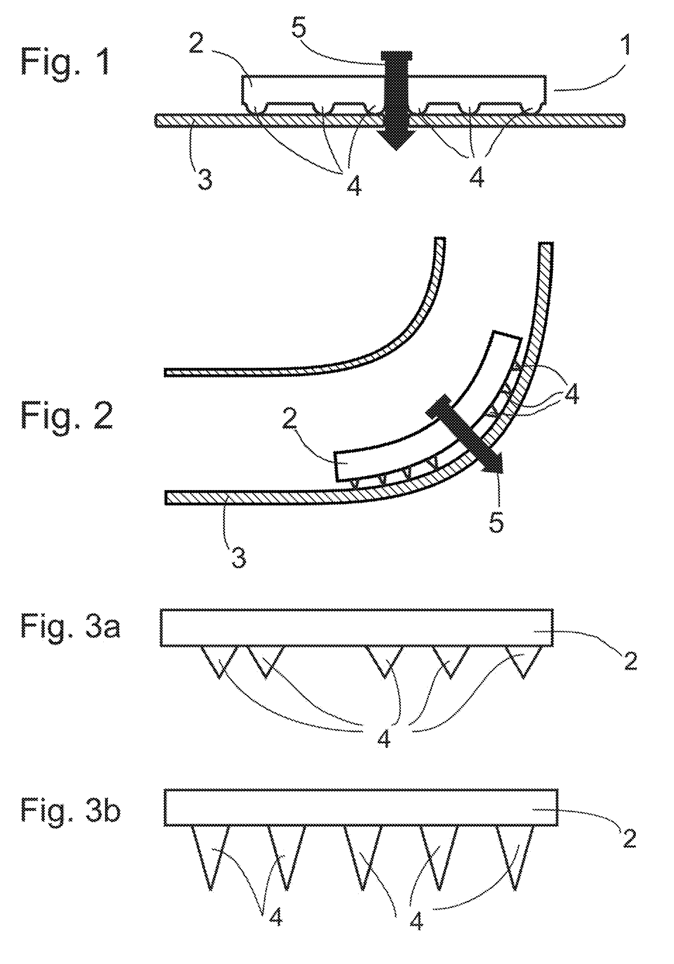

In Figur 1 ist ein erfindungsgemässes Dichtungs- und/oder Verstärkungselement dargestellt, welches im folgenden Dichtteil 1 genannt wird. Ein solches Dichtteil 1 zur Befestigung an einer Dichtfläche 3 besteht aus einem schäumbaren Material 2 und umfasst Abstandshalter 4 aus schäumbarem Material 2, welche auf der der Dichtfläche 3 zugewanden Seite des Dichtteils 1 ausgeformt sind.

Das Dichtteil 1 kann jegliche Form aufweisen, es wird bevorzugt den Erfordernissen der Dichtfläche 3 angepasst, wie beispielsweise in Figur 2 gezeigt.

Die Dichtfläche 3 kann aus jedem Material bestehen und jede Form aufweisen. Die Dichtfläche besteht typischerweise aus Metall, insbesondere Aluminium oder Stahl. Es handelt sich bei der Dichtfläche 3 üblicherweise um die Innenseite von einem Hohlraum von strukturellen Bauteilen. Beispielsweise handelt es sich bei derartigen strukturellen Bauteilen um Karosserien und/oder Rahmen von Transport- und Fortbewegungsmitteln, insbesondere von Fahrzeugen zu Wasser oder zu Land oder von Luftfahrzeugen, wie Karosserien oder Rahmen von Automobilen, Lastkraftwagen, Eisenbahnwagen, Booten, Schiffen, Hubschraubern und Flugzeugen, meist bevorzugt von Automobilen. Natürlich kann es sich bei derartigen strukturellen Bauteilen um jegliche industriell gefertigte Artikel handeln wie beispielsweise Waschmaschinen.

Bevorzugt handelt es sich um Dichtflächen von strukturellen Bauteilen, die bei ihrer Fertigung oberflächenbehandelt, typischerweise in Tauchbädern behandelt werden, insbesondere in Reinigungs-, Phosphatierungs-, beziehungsweise Tauchlackierungsbädern gereinigt, phosphatiert, beziehungsweise beschichtet werden. Diese Oberflächenbehandlungen dienen typischerweise dem Korrosionsschutz.

Wie in Figur 1 dargestellt, umfasst ein erfindungsgemässes Dichtteil 1 Abstandshalter 4 aus schäumbarem Material 2, welche auf der der Dichtfläche 3 zugewanden Seite des Dichtteils 1 ausgeformt sind.

Die Abstandhalter können eine Länge von 0.1 - 100, insbesondere 0.2 - 10, bevorzugt 0.5 - 3 mm aufweisen, von der der Dichtfläche 3 zugewanden Seite des Dichtteils 1 gemessen.

Die Abstandhalter 4 können auf der Dichtfläche 3 aufliegen oder auch nicht. Insbesondere kann die Kontaktfläche im Fall, dass das Dichtteil 1 über die Abstandhalter 4 auf der Dichtfläche 3 aufliegt, kleiner sein gegenüber dem Fall, dass das Dichtteil mit der gesamten der der Dichtfläche 3 zugewanden Seite auf der Dichtfläche aufliegt.

Die Auflagefläche, beziehungsweise Kontaktfläche, ist für Flüssigkeiten, beispielsweise von Reinigungs-, Phosphatierungs- oder Tauchlackierungsbädern, schlecht oder gar nicht zugänglich, darum ist es vorteilhaft, wenn die Kontaktfläche möglichst klein gehalten wird.

Ein weiterer Vorteil ist, dass durch die Abstandhalter 4 während dem Schäumen der vollflächige Kontakt zwischen dem geschäumten Material 7 und der Dichtfläche 3, insbesondere zwischen dem geschäumten Material und der Tauchlackierung auf der Dichtfläche, verzögert wird. Dadurch wird ein möglicher Einfluss des geschäumten Materials auf die noch nicht ausgehärtete Tauchlackierung reduziert.

Ein weiterer Vorteil ist, dass die Abstandhalter 4, da sie aus schäumbarem Material 2 bestehen, nach dem Schäumen eine Dicht- und/oder Verstärkungsfunktion übernehmen können und sich, insbesondere wenn sie aus dem gleichen schäumbaren Material 2 bestehen wie das Dichtteil 1, Teil des geschäumten Materials 7 werden. Dies kann sich gegenüber Abstandhaltern aus nicht schäumbarem Material vorteilhaft auf den Verbund des geschäumten Materials und dessen Dicht- und/oder Verstärkungsfunktion auswirken.

Die Wahl des schäumbaren Materials 2 der Abstandhalter 4 sowie die Ausformung und die Anordnung der Abstandhalter kann beliebig den Bedürfnissen des Dichtteils 1 und der Dichtfläche 3 angepasst werden. Des Weiteren kann die Ausformung und die Anordnung der Abstandhalter beliebig den Bedürfnissen des schäumbaren Materials angepasst werden.

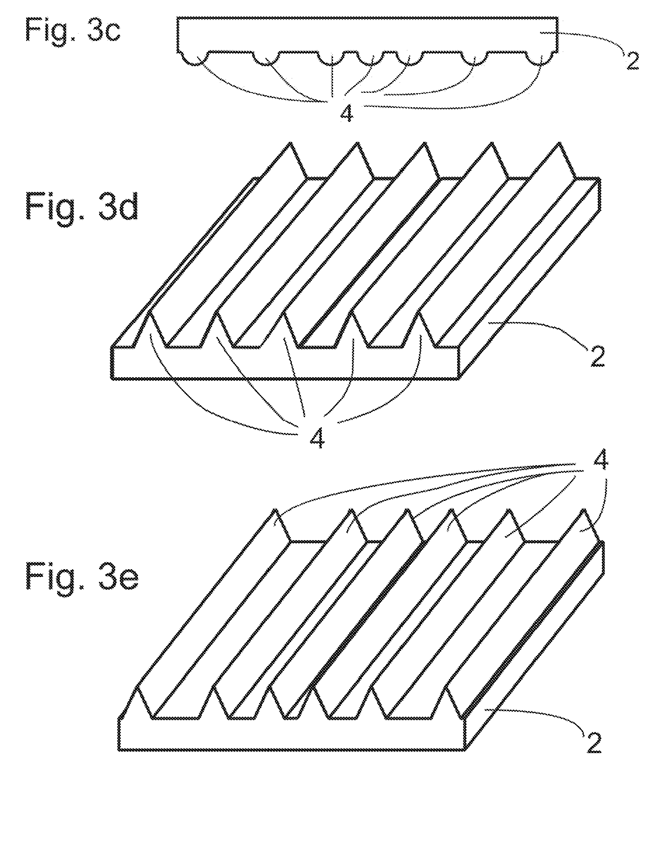

Eine besonders vorteilhafte Variante ist in den Figuren 3a - 3g dargestellt, bei welchen sich der Durchmesser der Abstandhalter 4 aus schäumbarem Material 2 gegen die Dichtfläche 3 hin verkleinert.

Dies hat insbesondere den Vorteil, dass es, bedingt durch die Verkleinerung des Durchmessers des Abstandhalters, während dem Schäumen des schäumbaren Materials länger dauert, bis geschäumtes Material 7 die Dichtfläche 3 erreicht. Die Tauchlackierung auf der Dichtfläche 3 hat dadurch länger Zeit, ohne Kontakt mit geschäumtem Material auszuhärten.

Ein weiterer Vorteil dieser Variante ist der Umstand, dass diese Ausbildung der Abstandhalter es erlaubt, im Falle einer Herstellung des Dichtteils zusammen mit den Abstandhaltern in einem Spritzgussverfahren, den hergestellten Spritzling einfach, insbesondere ohne Hinterschneidung bedingt durch die Abstandhalter, auszuwerfen.

Ein weiterer Vorteil dieser Variante ist der Umstand, dass diese Ausbildung der Abstandhalter es erlaubt, die Kontaktfläche zwischen Abstandhalter 4 und Dichtfläche 3 gegenüber Abstandhaltern mit gleichbleibendem Querschnitt zu verkleinern.

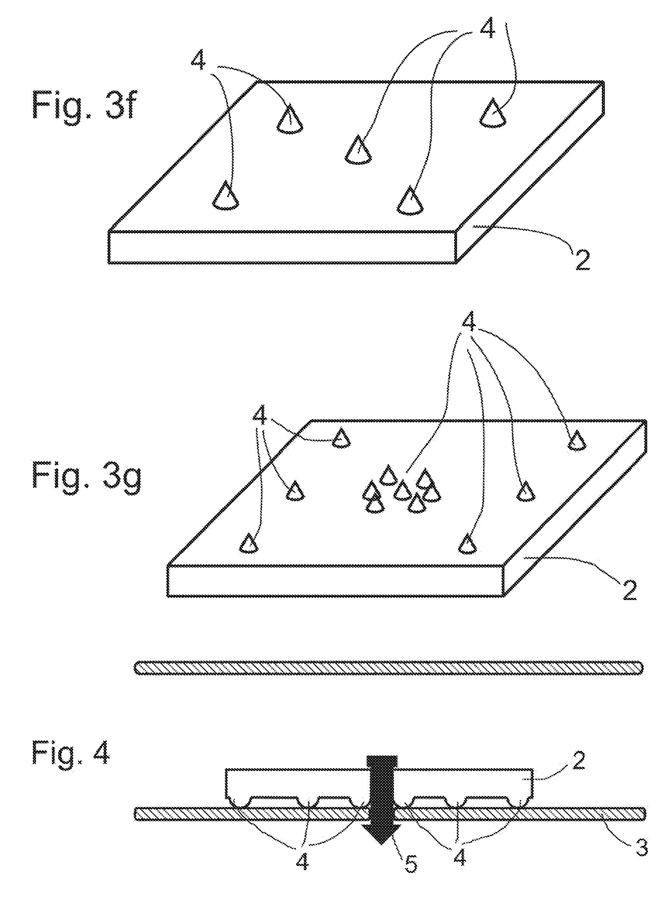

Wie in den Figuren 3a - 3c dargestellt, können die Abstandhalter 4 pyramidenförmig, spitz, halbsphärig ausgeformt sein, sie können jedoch auch stumpf oder in jeder anderen Form ausgeformt sein und natürlich können die Abstandhalter auch ungleichförmig ausgebildet sein. Wie in den Figuren 3d und 3f ersichtlich, können die einzelnen Abstandhalter punktförmig ausgebildet sein oder entlang von Linien auf der der Dichtfläche 3 zugewandten Seite des Dichtteils 1 ausgebildet sein. Insbesondere können die einzelnen Abstandhalter vollständig entlang einer Achsenlinie des Dichtteils ausgebildet sein.

Von Vorteil ist bei der vorgehend erwähnten punktförmigen Ausbildung, dass die Kontaktfläche der Abstandhalter 4 auf der Dichtfläche 3 kleiner ist als bei Ausbildungen entlang von Linien, wobei die Kontaktfläche geringer ist und damit ein grösserer Teil der Dichtfläche 3 für Flüssigkeiten zugänglich ist.

Von Vorteil ist bei der vorgehend erwähnten Ausbildung entlang von Linien, dass die Kontaktfläche der Abstandhalter 4 auf der Dichtfläche 3 grösser ist als bei punktförmigen Ausbildungen, was eine stabilere Auflage des Dichtteils auf der Dichtfläche erlaubt und ein eventuell vorhandenes Befestigungsmittel 5 weniger Belastungen durch den Fluss von Flüssigkeiten während Oberflächenbehandlungsbädern ausgesetzt wird. Somit werden weniger Anforderungen an das Material, die Funktionsweise und die Ausformung des Befestigungsmittels 5 gestellt. Ausserdem lassen sich Dichtteile mit Abstandhalter, wie sie in den Figuren 3d und 3e dargestellt sind, im Extrusionsverfahren herstellen.

Die Abstandhalter 4 können auch unregelmässig angeordnet werden, wie in Figur 3a gezeigt, insbesondere kann sich, wie in den Figuren 3e und 3g dargestellt, der Abstand zwischen den Abstandhaltern 4 gegen die Mitte der der Dichtfläche 3 zugewanden Seite des Dichtteils 1 hin verkleinern. Dies hat insbesondere den Vorteil, dass während dem Schäumen des schäumbaren Materials 2 in der Mitte der der Dichtfläche 3 zugewanden Seite des Dichtteils eine höhere Dichte von geschäumtem Material 7 entsteht. Dadurch wird die Luft, die sich zwischen dem Dichtteil und der Dichtfläche befindet, während dem Schäumen seitlich nach Aussen gedrückt und es wird weniger Luft zwischen Dichtteil und Dichtfläche von dem geschäumten Material eingeschlossen als bei einer Anordnung, bei der die Abstandhalter einen gleichmässigen Abstand zueinander aufweisen. In der Mitte der der Dichtfläche zugewanden Seite des Dichtteils eine dichtere, am Rande eine zunehmend weniger dichte Anordnung der Abstandhalter erlaubt also eine bessere seitliche Verdrängung der Luft bei der Schäumung.

Der gleiche vorteilhafte Effekt kann dadurch erreicht werden, dass sich, wie vorgehend erwähnt, der Durchmesser der Abstandhalter 4 aus schäumbarem Material 2 gegen die Dichtfläche 3 hin verkleinert.

Von geschäumtem Material 7 eingeschlossene Luft, insbesondere zwischen Dichtteil 1 und Dichtfläche 3, ist dahingehend von Nachteil, da sie die Dicht-, Verbund- und Verstärkungseigenschaften des schäumbaren Materials in seiner geschäumten Form negativ beeinflusst.

Weiterhin kann sich der Abstand zwischen den Abstandhaltern 4 auf einer Achse, wie in Figur 3e dargestellt, oder auf mehreren Achsen, wie in Figur 3g dargestellt, gegen die Mitte der der Dichtfläche 3 zugewanden Seite des Dichtteils 1 hin verkleinern.

Natürliche kann es vorteilhaft sein, die vorgehend erwähnten Ausführungsformen der Abstandhalter 4 zu kombinieren.

Als schäumbares Material 2 kann dabei grundsätzlich jedes beliebige Material eingesetzt werden, das kontrolliert zur Schäumung gebracht werden kann. Dieses Material kann dabei Verstärkungseigenschaften aufweisen oder auch nicht. Typischerweise wird das schäumbare Material thermisch, durch Feuchtigkeit oder durch elektromagnetische Strahlung geschäumt.
Ein solches schäumbares Material 2 weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage Schaumstrukturen in Polymeren zu erzeugen.

Bevorzugt wird das schäumbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel® von der Firma Akzo Nobel, Niederlande, oder unter dem Handelsnamen Celogen® von der Firma Chemtura Corp., USA.

Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von 80 °C bis 220 °C, insbesondere von 140 °C bis 200 °C, bevorzugt von 150 °C bis 180 °C, schäumbar.

Als schäumbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Neben Epoxid-Festharzen eignen sich auch kristalline Polyepoxide wie Triglycidylisocyanurate, Terephthalsäurediglycidylether, Gemische aus Terephthalsäurediglycidylether mit Trimellitsäuretriglycidylether , Hydrochinondiglycidylether sowie Addukte aus Trimethylolpropandiglycidylether mit Diisocyanaten wie 4,4'-, 2,4'- und 2,2'-Diphenylmethandiisocyanat (MDI), 2,4- und 2,6-Toluylendiisocyanat (TDI) oder 1-Isocyanato-3,3,5-trimethyl-5-isocyanatomethyl-cyclohexan (IPDI).
Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete schäumbare Materialien sind Treibmittel enthaltende einkomponentige Polyurethanzusammensetzungen aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polyisocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Weiterhin eignen sich als schäumbare Materialien Treibmittel enthaltende zweikomponentige Epoxid/Polyurethan-Zusammensetzungen, wie sie beispielsweise beschrieben sind in WO 2005/080524 A1, dessen Offenbarung hiermit eingeschlossen ist.

Ebenfalls geeignete schäumbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben, deren Offenbarung hiermit eingeschlossen ist.
Als schäumbare Materialien mit Verstärkungseigenschaften sind beispielsweise diejenigen bevorzugt, welche unter dem Handelsnamen SikaReinforcer^{®} 941 von der Sika Corp., USA, vertrieben werden. Diese sind beschrieben in US 6,387,470, dessen Offenbarung hiermit eingeschlossen ist.

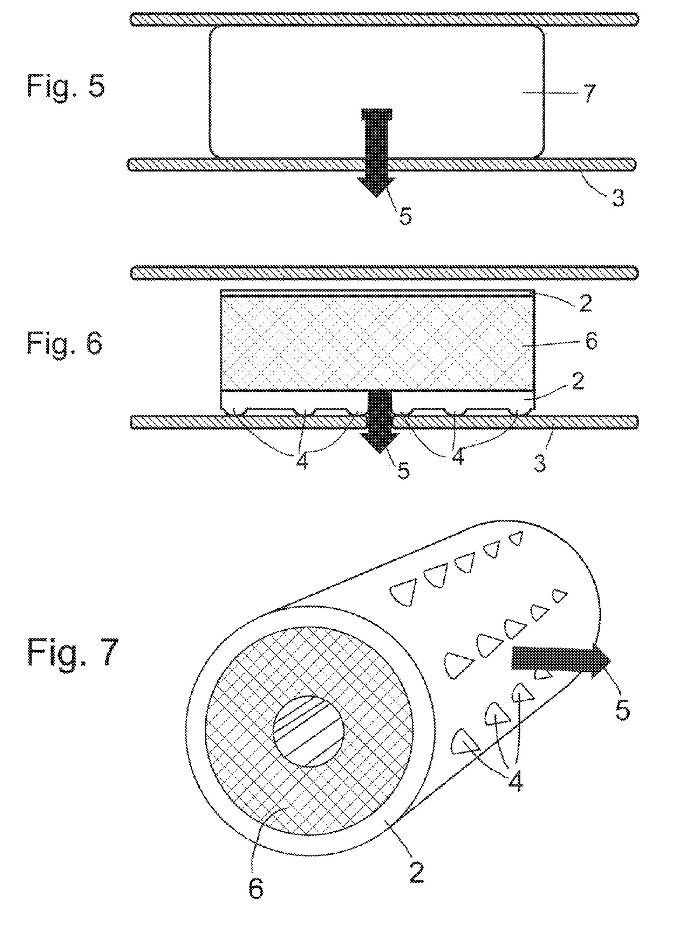

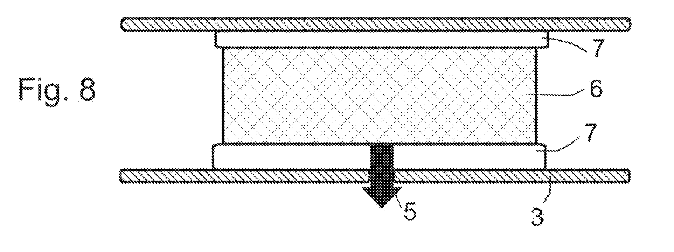

Im geschäumten Zustand kann das schäumbare Material insbesondere Dicht-, Verbund- und/oder Verstärkungsfunktionen übernehmen. Bevorzugt dient das geschäumte Material 7 in Hohlräumen von strukturellen Bauteilen einerseits als Dichtmittel, um den Hohlraum zu verkleinern, insbesondere zu unterbrechen, wie in Figur 5 gezeigt. Dadurch wird der Durchgang von Flüssigkeiten, insbesondere Wasser, oder Schallwellen reduziert, was sich vorteilhaft auf den Korrosionsschutz und die Schalldämmung des strukturellen Bauteils auswirkt. Andererseits kann es als Verstärkungsmittel dienen, um die Materialen, welche den Hohlraum bilden, zu verstärken, wie in Figur 5 gezeigt, insbesondere wenn das Dichtteil 1 mit einem Trägerteil 6 verbunden ist, wie in Figur 8 gezeigt ist. Ausserdem erreicht man im geschäumten Zustand eine grosse Auflagefläche und einen vorteilhaften Verbund zwischen geschäumtem Material 7 und den Materialen, welche den Hohlraum bilden, was besonders bei dünnwandigen Materialien von Vorteil ist. Dadurch wird das strukturelle Bauteil verstärkt, was sich vorteilhaft auf die Stabilität, die Crash-Performance oder die Dämpfung von Eigenschwingungen von strukturellen Bauteilen auswirkt.

Wie in Figur 1 gezeigt, kann das Dichtteil 1 weiterhin mindestens ein Befestigungsmittel 5, insbesondere einen Clip, zur Befestigung des Dichtteils 1 an der Dichtfläche 3 aufweisen.

Die Befestigung des Dichtteil 1 mit einem Befestigungsmittel 5 eignet sich insbesondere für Anwendungen, bei welchen ein möglichst grosser Teil der Oberfläche der Dichtfläche 3 für Oberflächenbehandlungen, beispielsweise während einem Reinigungs-, Phosphatierungs- oder einem Tauchlackierungsbad, erreichbar sein muss. In solchen Fällen ist eine Befestigung beispielsweise durch Verkleben nicht geeignet, da das Oberflächenbehandlungsmittel, insbesondere eine Flüssigkeit, die Stelle der Verklebung nicht erreichen kann. Weiterhin ist es von Vorteil, wenn das Befestigungsmittel 5 das Dichtteil 1 schnell und einfach mit der Dichtfläche 3 verbindet, da Zeitersparnis und Einfachheit der Montageschritte bei der industriellen Fertigung von grossem wirtschaftlichem Wert ist. Weiterhin ist das Befestigungsmittel vorteilhafterweise von genügender Festigkeit, um das Dichtteil trotz Strömungsbelastungen durch Flüssigkeiten, beispielsweise während Reinigungs-, Phosphatierungs- oder Tauchlackierungsbädern, an Ort und Stelle zu halten. Typischerweise verbindet das Befestigungsmittel das Dichtteil mit der Dichtfläche in einer Art und Weise, dass das Dichtteil über die Abstandhalter 4 direkt auf der Dichtfläche aufliegt. Dies hat den Vorteil, dass dadurch die mechanische Belastung der Flüssigkeiten das Befestigungsmittel weniger stark belastet. Natürlich kann das Befestigungsmittel auch so ausgeformt sein, dass die Abstandhalter nicht auf der Dichtfläche aufliegen, was dann jedoch ein belastbarer ausgeformtes Befestigungsmittel bedingt.

Das Befestigungsmittel 5 kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder beliebige Kombinationen dieser Materialien. Meist bevorzugt besteht das Befestigungsmittel 5 aus Polyamid. Insbesondere kann das Befestigungsmittel auch aus demselben Material wie das Dichtteil 1 bestehen, was den Vorteil hätte, dass Dichtteil und Befestigungsmittel zusammen in einem Fertigungsschritt, insbesondere Spritzgussschritt, hergestellt werden können.

Wie in den Figuren 6, 7 und 8 gezeigt ist, kann das Dichtteil 1 auf der der Dichtfläche 3 abgewandten Seite mit einem Trägerteil 6 verbunden sein. Das Trägerteil 6 kann aus beliebigen Materialien, insbesondere denselben Materialien wie sie vorhergehend als mögliche Materialien für Befestigungsmittel 5 erwähnt wurden, bestehen.

Weiterhin kann das Trägerteil 6 einen beliebigen Aufbau und eine beliebige Struktur aufweisen. Es kann beispielsweise massiv, wie in Figur 6 gezeigt, hohl, wie in den Figur 7 gezeigt, oder geschäumt sein oder eine gitterartige Struktur aufweisen.

Das Trägerteil 6 kann zusätzlich zu seiner Funktion zur strukturellen Verstärkung von Hohlräumen auch zur Abdichtung von Hohlräumen oder auch zur Geräuschdämmung beitragen. Insbesondere kann ein solches Trägerteil 6 das mechanische Verhalten von Fahrzeugstrukturen, wie z.B. die Crash-Performance, die Steifigkeit, die Vibrationsdämpfung verbessern.

Das Dichtteil 1 kann das Trägerteil 6 parallel zur Dichtfläche 3 teilweise oder vollständig umfassen.

Weiterhin umfasst die Erfindung ein Verfahren zur Herstellung eines erfindungsgemässen Dichtteils 1, wie es vorhergehend beschrieben wurde. Die Herstellung erfindungsgemässer Dichtteile kann auf mehrere Arten erfolgen, insbesondere durch Spritzgiessen und/oder Extrusion.

In einer möglichen Variante erfolgt die Herstellung erfindungsgemässer Dichtteile, wie sie beispielsweise in den Figuren 3a bis 3g dargestellt sind, im Spritzgussverfahren. Das Spritzgussverfahren kann sich dadurch unterscheiden, ob das Dichtteil 1 und die Abstandshalter 4 auf demselben oder aus verschiedenem schäumbarem Material 2 bestehen.

Die Abstandhalter 4 können aus dem gleichen oder einem anderen schäumbaren Material 2 bestehen wie das Dichtteil 1, vorteilhafterweise bestehen die Abstandhalter 4 aus dem gleichen schäumbaren Material 2 wie das Dichtteil 1. Bestehen sie aus demselben schäumbaren Material, weist das Verfahren nur einen Spritzguss-Vorgang auf, was kostengünstiger ist. Ausserdem erlaubt dies das nachträgliche und kostengünstige Herausarbeiten von Abstandhaltern in bereits bestehende Spritzgussformen für Dichtteile, welche keine Abstandhalter aufweisen, beispielsweise durch Fräsen, was die Anschaffung einer neuen Spritzgussform erübrigt.

Bestehen das Dichteil und die Abstandshalter aus verschiedenen schäumbaren Materialien, wird üblicherweise ein Zweikomponenten-Spritzgussverfahren eingesetzt. Dabei wird zuerst eine erste Komponente, in diesem Fall das Dichtteil 1, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall die Abstandhalter 4, werden mit einem zweiten Spritzaggregat an die erste Komponente angespritzt.

In einer weiteren möglichen Variante erfolgt die Herstellung erfindungsgemässer Dichtteile, wie sie insbesondere in den Figuren 3d und 3e dargestellt sind, durch Extrusion. Die Herstellung durch Extrusion ist insbesondere vorteilhaft, wenn die Abstandhalter 4 aus dem gleichen schäumbaren Material 2 bestehen wie das Dichtteil 1 und wenn die Abstandhalter 4 vollständig entlang einer Achsenlinie des Dichtteils ausgebildet sind.

Ausserdem erlaubt dies das nachträgliche und kostengünstige Herausarbeiten von Abstandhaltern in bereits bestehende Extrusionsdüsen für Dichtteile, welche keine Abstandhalter aufweisen, beispielsweise durch Fräsen, was die Anschaffung einer neuen Extrusionsdüse erübrigt.

Ist das Dichtteil 1 auf der der Dichtfläche 3 abgewandten Seite mit einem Trägerteil 6 verbunden, und besteht das Trägerteil 6 aus einem Material, welches sich nicht durch das Spritzgussverfahren herstellen lässt, also beispielsweise aus einem Metall, kann das Trägerteil in ein entsprechendes Werkzeug gelegt und das Dichtteil wird an das Trägerteil angespritzt.

Lässt sich das Trägerteil 6 durch Spritzguss herstellen, kann das vorgängig erwähnte Zweikomponenten-Spritzgussverfahren eingesetzt werden. Dabei kann zuerst als erste Komponente das Trägerteil 6 und als zweite Komponente das Dichtteil 1 gespritzt werden.

Selbstverständlich besteht auch die Möglichkeit, das Trägerteil 6 durch beliebige andere Herstellungsarten herzustellen und durch beliebige andere Verbindungsmittel oder -verfahren mit dem Dichtteil zu verbinden. Das gleiche gilt auch für die Herstellung der Abstandhalter 4 sowie deren Verbindung mit dem Dichtteil.

Weiterhin umfasst die Erfindung die Verwendung eines Dichtteils 1, wie es vorhergehend beschrieben wurde, zur Abdichtung und/oder zur Verstärkung von Hohlräumen von strukturellen Bauteilen. Vorzugsweise werden derartige strukturelle Bauteile in Karosserien und/oder Rahmen von Transport- und Fortbewegungsmitteln, insbesondere von Fahrzeugen zu Wasser oder zu Land oder von Luftfahrzeugen, eingesetzt. Bevorzugt umfasst die Erfindung die Verwendung eines erfindungsgemässen Dichtteils 1 in Karosserien oder Rahmen von Automobilen, Lastkraftwagen, Eisenbahnwagen, Booten, Schiffen, Hubschraubern und Flugzeugen, meist bevorzugt in Automobilen.

Figur 2 und Figur 4 zeigen ein Dichtteil 1, respektive zeigt Figur 6 ein Dichtteil 1 verbunden mit einem Trägerteil 6, wie es in einem Hohlraum eines strukturellen Bauteils eingesetzt ist, vor der Schäumung des schäumbaren Materials 2.

Figur 5 zeigt ein Dichtteil 1, respektive zeigt Figur 8 ein Dichtteil 1 verbunden mit einem Trägerteil, wie es in einem Hohlraum eines strukturellen Bauteils eingesetzt ist. Das schäumbare Material 2 ist in diesem Fall bereits vollständig geschäumt und dichtet und/oder verstärkt den Hohlraum des strukturellen Bauteils.

Die Form und Struktur erfindungsgemässer Dichtteile 1 kann gemäss ihrem Einsatzort, insbesondere entsprechend der Form der Hohlräume, beliebig gewählt werden.

Weiterhin umfasst die Erfindung ein Verfahren zur Abdichtung und/oder Verstärkung von Hohlräumen von strukturellen Bauteilen umfassend die Schritte
i) Platzieren eines Dichtteils gemäss vorhergehender Beschreibung in einem Hohlraum; und
ii) Schäumen des schäumbaren Materials.

Insbesondere umfasst die Erfindung ein Verfahren zur Abdichtung und/oder Verstärkung von Hohlräumen von strukturellen Bauteilen, wobei das schäumbare Material thermisch schäumbar ist. Schritt ii) umfasst somit das Erhöhen der Temperatur auf die Schäumungstemperatur des schäumbaren Materials. Diese Temperatur ist von 80 °C bis 220 °C, insbesondere 140 °C bis 200 °C, bevorzugt 150 °C bis 180 °C.

Weiterhin umfasst die Erfindung ein geschäumtes Dichtteil erhalten durch das Schäumen eines Dichtteils gemäss vorhergehender Beschreibung.

Selbstverständlich ist die Erfindung nicht auf die gezeigten und beschriebenen Ausführungsbeispiele beschränkt.

### Bezugszeichenliste

- 1: Dichtteil
- 2: schäumbares Material
- 3: Dichtfläche
- 4: Abstandhalter
- 5: Befestigungsmittel
- 6: Trägerteil
- 7: geschäumtes Material 2

## Patentansprüche

1. Dichtteil (1) aus schäumbarem Material (2) zur Befestigung an einer Dichtfläche (3), **dadurch gekennzeichnet, dass** auf der der Dichtfläche (3) zugewanden Seite des Dichtteils (1) Abstandhalter (4) ausgeformt sind, wobei die Abstandhalter (4) aus schäumbarem Material (2) bestehen.

2. Dichtteil gemäss Anspruch 1, **dadurch gekennzeichnet, dass** der Durchmesser der Abstandhalter (4) sich gegen die Dichtfläche (3) hin verkleinert.

3. Dichtteil gemäss Anspruch 1 oder 2, **dadurch gekennzeichnet, dass** die Abstandhalter (4) stumpf, pyramidenförmig, spitz, halbsphärig ausgeformt sind.

4. Dichtteil gemäss einem der vorhergehenden Ansprüche, **dadurch gekennzeichnet, dass** sich der Abstand zwischen den Abstandhaltern (4) gegen die Mitte der der Dichtfläche (3) zugewanden Seite des Dichtteils hin verkleinert.

5. Dichtteil gemäss einem der vorhergehenden Ansprüche, **dadurch gekennzeichnet, dass** die Abstandhalter (4) aus dem gleichen oder einem anderen schäumbaren Material (2) bestehen wie das Dichtteil (1).

6. Dichtteil gemäss einem der vorhergehenden Ansprüche, **dadurch gekennzeichnet, dass** das schäumbare Material (2) thermisch, durch Feuchtigkeit oder durch elektromagnetische Strahlung, insbesondere thermisch, geschäumt wird.

7. Dichtteil gemäss einem der vorhergehenden Ansprüche, **dadurch gekennzeichnet, dass** das schäumbare Material (2) thermisch, bei einer Temperatur von 80 °C bis 220 °C, insbesondere von 140 °C bis 200 °C, bevorzugt von 150 °C bis 180 °C, schäumbar ist.

8. Dichtteil gemäss einem der vorhergehenden Ansprüche, **dadurch gekennzeichnet, dass** die Dichtfläche (3) aus einem Metall, insbesondere Aluminium oder Stahl, besteht.

9. Dichtteil gemäss einem der vorhergehenden Ansprüche, **dadurch gekennzeichnet, dass** das Dichtteil ein Befestigungsmittel (5), insbesondere einen Clip, zur Befestigung des Dichtteils (1) an der Dichtfläche (3) aufweist.

10. Dichtteil gemäss Anspruch 9, **dadurch gekennzeichnet, dass** die Befestigungsmittel (5) aus schäumbarem Material (2) bestehen.

11. Dichtteil gemäss einem der vorhergehenden Ansprüche, **dadurch gekennzeichnet, dass** das Dichtteil (1) auf der der Dichtfläche (3) abgewandten Seite mit einem Trägerteil (6) verbunden ist.

12. Dichtteil gemäss Anspruch 11, **dadurch gekennzeichnet, dass** das Dichtteil (1) das Trägerteil (6) parallel zur Dichtfläche (3) teilweise oder vollständig umfasst.

13. Verwendung eines Dichtteil (1) gemäss einem der Ansprüche 1 bis 12 zur Abdichtung und/oder Verstärkung von Hohlräumen von strukturellen Bauteilen.

14. Verwendung gemäss Anspruch 13 zur Abdichtung und/oder Verstärkung von Hohlräumen von strukturellen Bauteilen in Karosserien und/oder Rahmen von Transport- und Fortbewegungsmitteln, insbesondere von Fahrzeugen zu Wasser oder zu Land oder von Luftfahrzeugen, bevorzugt von Automobilen, Lastkraftwagen, Eisenbahnwagen, Booten, Schiffen, Hubschraubern und Flugzeugen.

15. Verfahren zur Abdichtung und/oder Verstärkung von Hohlräumen von strukturellen Bauteilen umfassend die Schritte
i) Platzieren des Dichtteils gemäss einem der Ansprüche 1 bis 12 in einem Hohlraum; und
ii) Schäumen des schäumbaren Materials (2).

16. Verfahren gemäss Anspruch 15,
**dadurch gekennzeichnet,**
**dass** das schäumbare Material (2) thermisch schäumbar ist und dass der Schritt ii) das Erhöhen der Temperatur auf die Schäumungstemperatur des schäumbaren Materials (2) umfasst, wobei diese Temperatur von 80 °C bis 220 °C, insbesondere von 140 °C bis 200 °C, bevorzugt von 150 °C bis 180 °C ist.

17. Verfahren zur Herstellung eines Dichtteils gemäss einem der Ansprüche 1 bis 12, insbesondere durch Spritzgiessen und/oder Extrusion.

18. Verfahren gemäss Anspruch 17, **dadurch gekennzeichnet, dass** das Verfahren nur einen Spritzguss-Vorgang oder nur einen ExtrusionsVorgang aufweist.
